# EUROPÄISCHE PATENTSCHRIFT

(11) **EP 1 288 081 B1**
(45) Veröffentlichungstag und Bekanntmachung des Hinweises auf die Patenterteilung: **29.09.2004**
(21) Anmeldenummer: 02014753.4
(22) Anmeldetag: 04.07.2002
(51) Int. Cl.: B60R 21/20

(54) **Instrumententafel für ein Kraftfahrzeug**
Dashboard for a motor vehicle
Planche de bord pour un véhicule automobile

(30) Priorität: 30.08.2001 DE 10142345
(43) Veröffentlichungstag der Anmeldung: 05.03.2003
(73) Patentinhaber: Bayerische Motoren Werke Aktiengesellschaft, 80809 München (DE)
(72) Erfinder: Jarosch, Oliver, Dr., 80331 München (DE); Wagner, Erik, 84030 Landshut (DE)

(56) Entgegenhaltungen:
- WO-A-00/78579
- DE-A- 10 027 351
- DE-U- 29 823 765
- US-A- 5 797 619

## Beschreibung

Die Erfindung bezieht sich auf eine Instrumententafel für ein Kraftfahrzeug, wie sie im Oberbegriff des Hauptanspruchs beschrieben ist, sowie auf ein Verfahren zum Herstellen einer solchen Instrumententafel.

In der EP 0 465 869 B1 ist eine gattungsgemäße Instrumententafel beschrieben. Sie besteht aus einer sichtbaren Außenhaut, die an ihrer Rückseite eingeschnitten ist und der Verlauf der Schnittlinie den Aufreißdeckel einer Austrittsöffnung für den Luftsack einer Airbageinheit definiert. Die Außenhaut ist darüber hinaus hinterschäumt; dabei tritt das Schaummaterial beim Hinterschäumen in den Spalt der Schnittlinie ein und füllt ihn aus. Dies führt zu einem Verkleben des Schnitts, was zu einem unkontrollierten Aufreißen der Instrumententafel führt. Des Weiteren kann sich das in den Schnitt eindringende Material nach außen hin abbilden, insbesondere dann wenn der Schnitt sehr tief geführt wird, so dass bspw. nur noch etwa eine Restwandstärke von 3/10 der Gesamtwandstärke der Außenhaut übrigbleibt.

Aufgabe der Erfindung ist es, eine gattungsgemäße Instrumententafel in der Weise weiterzubilden, dass sie beim Auslösen des Airbags eindeutig entlang der Schnittlinie aufreißt und sich die durch die Schnittlinie vordefinierte Form der Austrittsöffnung nicht nach außen hin sichtbar abbildet.

Die Aufgabe wird erfindungsgemäß mit den kennzeichnenden Merkmalen des Anspruche 1 und dem Verfahren nach Anspruch 4 gelöst. Weitere Ausgestaltungen der Erfindung ergeben sich aus den Unteransprüchen.

Nach der Erfindung wird das Material der Hinterschäumung daran gehindert, in den Spalt der Schnittlinie einzudringen. Das Material kann dadurch die Schnittkanten nicht miteinander verkleben.

Das Eindringen des hinterschäumten Materials verhindert eine Versiegelungsschicht, die vor dem Hinterschäumen aufgebracht wird. Als Material dieser Versiegelungsschicht kann ein 2 Komponenten Polyurethan-System gewählt werden, das einerseits hochreaktiv ist, d.h. unmittelbar nach dem Auftrag aushärtet und damit nicht in den Schnittspalt hineinläuft. Dies wird darüber hinaus durch eine geringe Fließeigenschaft dieses Materials unterstützt. Um ein definiertes Reißen der Außenhaut entlang der Schnittlinie sicherzustellen, zeichnet sich das Versiegelungsmaterial weiter durch eine geringe Eigenfestigkeit und eine niedrige Weiterreißfestigkeit aus.

Die Außenhaut und das hinterschäumte Material bestehen in der Regel ebenfalls aus Materialen auf der Basis von Polyurethan. Dadurch ergibt sich eine gute Materialverwandtschaft zu der Versiegelungsschicht mit dem Ergebnis einer guten Haftung der drei Schichten zueinander.

Weiter vorteilhafte Ausgestaltungen der Erfindung ergeben sich aus der nachfolgenden Beschreibung anhand der dazugehörenden Zeichnung. Es zeigen
- **Figur 1**: in perspektivischer Darstellung eine Instrumententafel eines Kraftfahrzeuges und
- **Figur 2**: einen Ausschnitt bei der Herstellung der Instrumententafel.

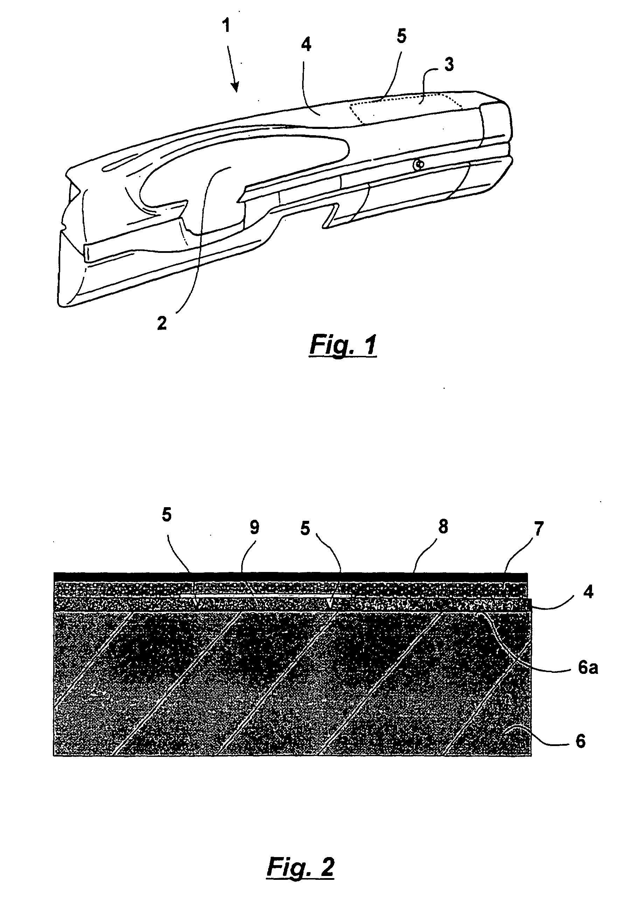

Die in **Figur 1** gezeigte Instrumententafel 1 eines Kraftfahrzeuges ist lediglich schematisch dargestellt, das heißt, die wesentlichen Einbauten wie Instrumente usw. fehlen. Ebenso wenig sind die die Instrumententafel umgebenden Karosserieabschnitte dargestellt. Demgegenüber ist auf der Fahrerseite eine Öffnung 2 erkennbar mit einem oberen Bereich, der bei vollständig montierter Instrumententafel die Instrumente aufnimmt. Ein unterer Abschnitt der Öffnung 2 erlaubt den Durchtritt einer nicht weiter dargestellten Lenksäule.

Auf der Beifahrerseite weist die Instrumententafel 1 eine normalerweise verschlossene, aufreißbare Austrittsöffnung 3 auf für den Luftsack einer nicht näher dargestellten, hinter der Instrumententafel 1 liegenden Airbageinheit. In der **Figur 1** ist die Austrittsöffnung 3 gestrichelt gezeichnet. Diese Darstellungsart ist gewählt, um ihre Lage auf der Instrumententafel zu zeigen. Tatsächlich ist sie integraler Bestandteil einer Außenhaut 4 der Instrumententafel 1. Sie ist dabei durch eine an der Rückseite der Außenhaut angebrachte umlaufende und den Querschnitt der Außenhaut schwächende Schnittlinie 5 definiert.

In **Figur 2** sind zwei Querschnitte der Schnittlinie 5 erkennbar. In dieser Darstellung liegt die Außenhaut 4 in einer Werkzeugform 6. Dabei zeigt die sichtbare Seite der Außenhaut nach unten zur Formoberfläche 6a hin. Die Tiefe der Schnittlinie ist dabei so gewählt, dass noch etwa 3/10 der Gesamtstärke der Außenhaut 4 übrigbleibt. An der Rückseite der Außenhaut 4 ist eine Schicht 7 aus Halbhartschaum aufgebracht, die von einer weiteren Stützschicht 8 abgedeckt ist. Die Schichten 7 und 8 bestehen aus unterschiedlich harten Polyurethan-Schaumstoffen.

Zwischen der Schicht 7 und der Rückseite der Außenhaut überdeckt eine Versiegelungsschicht 9 die durch die Schnittlinie 5 begrenzte Fläche und deren Nachbarbereiche.

Die Instrumententafel wird in wie nachfolgend hergestellt. Zunächst wird die Rückseite der Außenhaut bis zu einer Tiefe von 7/10 der Gesamtwandstärke mit einem Ultraschall- oder Lasermesser eingeschnitten. Die so erhaltene Schnittlinie bildet dabei die Kontur der späteren Austrittsöffnung des Luftsacks aus . Die Außenhaut 4 wird darauf hin so in die Form 6 eingelegt, dass die Schnittlinie 5 freiliegt. Als nächster Verfahrensschritt wird im Bereich der Schnittlinie 5 die Versiegelungsschicht 9 aufgesprüht, die sogleich aushärtet. Schließlich wird der Bereich zwischen Schicht 4 und 8 ausgeschäumt.

## Patentansprüche

1. Instrumententafel (1) für ein Kraftfahrzeug, mit einer normalerweise verschlossenen, aufreißbaren Austrittsöffnung (2,3) für einen Luftsack einer hinter der Instrumententafel (1) angeordneten Airbageinheit, wobei die Instrumenttafel (1) aus einer dem Fahrzeuginnenraum zugekehrten, sichtbaren Außenhaut (4) besteht, die an ihrer Rückseite eine den Querschnitt schwächende Schnittlinie (5) zur Bildung der Aufreißöffnung aufweist und darüber hinaus an ihrer Rückseite durch mindestens eine Hartschaumschicht (7) verstärkt ist, **dadurch gekennzeichnet, dass** wenigstens im Bereich der Schnittlinie (5) eine Versiegelungsschicht (9) die Rückseite der Außenhaut (4) von der Hartschaumschicht (7) trennt.

2. Instrumententafel nach Anspruch 1, **dadurch gekennzeichnet, dass** die Versiegelungsschicht (9) aus einem hochreaktiven 2 Komponenten Polyurethan-System besteht, das geringe Fließeigenschaften und Eigenfestigkeiten aufweist sowie eine geringe Weiterreißfestigkeit besitzt und darüber hinaus durch seine hohe Reaktivität nicht in den Spalt der Schnittlinie (5) eindringt.

3. Verfahren zur Herstellung einer Instrumententafel (1) für ein Kraftfahrzug, die eine normalerweise verschlossene, aufreißbare Austrittsöffnung (2,3) für einen Luftsack einer hinter der Instrumententafel angeordneten Airbageinheit vorsieht, wobei die Instrumenttafel (1) aus einer dem Fahrzeuginnenraum zugekehrten, sichtbaren Außenhaut (4) besteht, die an ihrer Rückseite eine den Querschnitt schwächende Schnittlinie (5) zur Bildung der Aufreißöffnung aufweist und darüber hinaus an ihrer Rückseite durch mindestens eine Halbhartschaumschicht (7) verstärkt ist, wobei in einem ersten Schritt die Außenhaut (4) an ihrer Rückseite mit der Schnittlinie (5) versehen wird, **dadurch gekennzeichnet, dass** in einem weiteren Schritt die Außenhaut (4) in ein Formwerkzeug (6) so eingelegt wird, dass die Schnittlinie (5) freiliegt, sodann eine Versiegelungsschicht (9) wenigstens entlang der Schnittlinie (5) aufgesprüht und darüber schließlich die Hartschaumschicht (7) durch Hinterschäumen aufgebracht wird.

## Claims

1. An instrument board (1) for a motor vehicle, comprising a normally closed tearable outlet opening (2, 3) for an air bag in an air bag unit disposed behind the instrument board (1), wherein the instrument board (1) comprises a visible outer skin (4) facing the vehicle interior, formed at the back with a cut line (5) weakening the cross-section so as to form the tearable opening, and also reinforced at the back by at least one hard foam layer (7), **characterised in that** a sealing layer (9) separates the back of the outer skin (4) from the hard foam layer (7) at least in the neighbourhood of the cut line (5).

2. An instrument board according to claim 1, **characterised in that** the sealing layer (9) is made of a highly reactive two-component polyurethane system which has low flow properties and low intrinsic strength and also low resistance to further tearing and additionally owing to its high reactivity does not penetrate into the gap formed by the cut line (5).

3. A method of producing an instrument board (1) for a motor vehicle, comprising a normally closed tearable outlet opening (2, 3) for an air bag in an air bag unit disposed behind the instrument board, wherein the instrument board (1) comprises a visible outer skin (4) facing the vehicle interior and formed at its back with a cut line (5) which weakens the cross-section so as to form the tearable opening, and also reinforced at the back by at least one semi-hard foam layer (7), wherein in a first step the cut line (5) is formed on the back of the outer skin (4), **characterised in that** a second step the outer skin (4) is placed in a mould (6) so thai the cut line (5) is exposed, a sealing layer (9) is then sprayed at least along the cut line (5), and finally the hard foam layer (7) is applied over it by foaming from the back.

## Revendications

1. Tableau de bord (1) pour un véhicule automobile doté d'une ouverture de sortie (2, 3) arrachable, normalement fermée, destinée à un sac gonflable pour un dispositif d'airbag disposé derrière le tableau de bord (1), le tableau de bord (1) se composant d'une coque extérieure (4) visible tournée vers l'habitacle du véhicule, laquelle coque extérieure présente sur sa face arrière une ligne de détourage (5) atténuant la section transversale afin de former l'ouverture déchirable et est de plus renforcée au niveau de sa face arrière par au moins une couche de mousse dure (7),
**caractérisée en ce qu'**
une couche de colmatage (9) sépare le dos de la coque extérieure (4) de la couche de mousse dure (7) au moins dans la zone de la ligne de détourage (5).

2. Planche de bord selon la revendication 1,
**caractérisée en ce que**
la couche de colmatage (9) se compose d'un matériau en polyuréthane hautement réactif à double composant qui présente une bonne viscosité et moins de stabilité inhérente ainsi qu'une résistance au déchirement moins importante et qui n'entre pas dans la fente de la ligne de déroutage (5) en raison de sa réactivité élevée.

3. Procédé pour la fabrication d'un tableau de bord (1) pour un véhicule automobile doté d'une ouverture de sortie (2, 3) arrachable, normalement fermée, destinée à un sac gonflable pour un dispositif d'airbag disposé derrière le tableau de bord (1), le tableau de bord (1) se composant d'une coque extérieure (4) visible tournée vers l'habitacle du véhicule, laquelle coque extérieure présente sur sa face arrière une ligne de détourage (5) atténuant la section transversale afin de former l'ouverture déchirable et de plus renforcée au niveau de sa face arrière par au moins une couche de mousse dure (7), la coque extérieure (4) étant dotée dans une première étape d'une ligne de détourage (5) au niveau de sa face arrière,
**caractérisée en ce que**
dans une autre étape, la coque extérieure (4) est placée dans une matrice (6) de sorte que la ligne de détourage (5) est libérée de manière à ce qu'une couche de colmatage (9) soit appliquée au moins le long de la ligne de détourage (5) et qu'ensuite la couche de mousse dure (7) soit enfin appliquée par moussage sur la surface arrière.
